**Europäisches Patentamt**

**European Patent Office**

**Office européen des brevets**

(19)

(11) Veröffentlichungsnummer : **0 403 772 B1**

(12) **EUROPÄISCHE PATENTSCHRIFT**

(45) Veröffentlichungstag der Patentschrift :
**11.11.92 Patentblatt 92/46**

(21) Anmeldenummer : **90108233.9**

(22) Anmeldetag : **30.04.90**

(51) Int. Cl.⁵ : **B62D 61/12**

(54) Einrichtung zur Gewinnung eines Achslastsignals der mechanisch gefederten Antriebsachse eines Lift-Achsaggregats.

(30) Priorität : **21.06.89 DE 3920287**

(43) Veröffentlichungstag der Anmeldung :
**27.12.90 Patentblatt 90/52**

(45) Bekanntmachung des Hinweises auf die
Patenterteilung :
**11.11.92 Patentblatt 92/46**

(84) Benannte Vertragsstaaten :
**AT DE FR GB IT NL SE**

(56) Entgegenhaltungen :
**DE-A- 1 946 446**
**DE-A- 2 652 811**

(73) Patentinhaber : **WABCO Westinghouse
Fahrzeugbremsen GmbH
Am Lindener Hafen 21 Postfach 91 12 80
W-3000 Hannover 91 (DE)**

(72) Erfinder : **Eckert, Horst
Marienhöhe 2
W-3056 Rehburg-Loccum 3 (DE)**

(74) Vertreter : **Schrödter, Manfred
WABCO Westinghouse Fahrzeugbremsen
GmbH Am Lindener Hafen 21 Postfach 91 12
80
W-3000 Hannover 91 (DE)**

## Beschreibung

Die Erfindung betrifft eine Einrichtung zur Gewinnung eines Achslastsignals der mechanisch gefederten Antriebsachse eines aus der Antriebsachse und einer durch Druckbeaufschlagung wenigstens eines Druckmittelelements mit wenigstens einem Abschaltdruck abschaltbaren Liftachse bestehenden Lift-Achsaggregats mit einem Signalkörper, der abhängig vom Weg eines Punktes der Antriebsachse relativ zum Fahrzeugoberbau um eine am Fahrzeugoberbau feste Drehachse drehbar ist, wobei die Mantelfläche des Signalkörpers wenigstens eine Kontur aufweist, die für jede Drehstellung des Signalkörpers einen vorbestimmten Abstand im wesentlichen quer zu der Drehachse von einem Punkt des Fahrzeugoberbaus einnimmt und die Einrichtung ferner einen den Abstand erfassenden elektrischen Wegsensor aufweist.

In einem Lift-Achsaggregat der vorstehend erwähnten Art wird die Liftachse durch Druckbeaufschlagung des Druckmittelelements mit einem Abschaltdruck oder einem höheren Druck von der Fahrbahn abgehoben und dadurch abgeschaltet. In diesem Zustand wirkt die Antriebsachse als Einzelachse und trägt die volle Achslast. Durch Druckentlastung des Druckmittelelements - seitens des Fahrers oder selbsttätig - können die Liftachse auf die Fahrbahn abgesenkt und damit zugeschaltet und das Lift-Achsaggregat unter Erhöhung seiner Tragkraft zu einer Doppelachse werden.

Die Höhe des Abschaltdrucks hängt unter anderem von der momentanen Achslast des Lift-Achsaggregates und der Auslegung des Druckmittelelements ab. Bei Beaufschlagung des Druckmittelelements mit geringerem Druck als dem Abschaltdruck übernimmt die Liftachse je nach Höhe des Drucks einen Anteil der momentanen Achslast. Herrscht in dem Druckmittelelement nur Umgebungsdruck, ist es also völlig druckentlastet, so bestimmt sich der von der Liftachse übernommene Achslastanteil nur nach Hebelverhältnissen im Lift-Achsaggregat. In diesem Zustand ist die Liftachse voll zugeschaltet.

Die Achslast bzw. der Achslastanteil der Antriebsachse bei abgeschalteter bzw. bei zugeschalteter Liftachse können durch den Weg eines Punktes der Antriebsachse relativ zum Fahrzeugoberbau und durch den Druck des Druckmittelelements beschrieben werden. Bei voll zugeschalteter Liftachse, d.h. bei Umgebungsdruck im Druckmittelelement, ist der Achslastanteil der Antriebsachse proportional der Achslast des kompletten Lift-Achsaggregats und damit auch ein Maß für diese. Beim Zu- und Abschalten der Liftachse, d.h. bei deren Absenken und Anheben, macht der betrachtete Punkt der Antriebsachse einen Wegsprung, der sich zur Achslastbestimmung nicht auswerten läßt.

Eine Einrichtung der eingangs genannten Art ist in der nicht vorveröffentlichten EP-A-0 372 197 beschrieben. Diese gehört zum Stand der Technik gemäß Artikel 54(3)EPÜ. In dieser ist auf der Oberfläche des Signalkörpers ein dreidimensionales Kennfeld angeordnet, welches für jede Konstellation von Drehstellung und Axialstellung des Signalkörpers einen vorbestimmten Abstand von einem Punkt des Fahrzeugoberbaus aufweist, welcher Abstand von dem Fühler des am Fahrzeugoberbau befestigten elektrischen Wegsensors erfaßt und von dem Wegsensor in das Achslastsignal umgesetzt wird. Zur lastabhängigen Einstellung des Signalkörpers und damit des Kennfeldes wird der Signalkörper abhängig vom Weg des Punktes der Antriebsachse relativ zum Fahrzeugoberbau (Einfederung der Antriebsachse) um eine am Fahrzeugoberbau feste Drehachse gedreht und abhängig vom Druck des Druckmittelelements axial verschoben.

Die bekannte Einrichtung ist aufgrund des erforderlichen dreidimensionalen Kennfelds auf der Oberfläche des Signalkörpers aufwendig.

Der Erfindung liegt deshalb die Aufgabe zugrunde, eine Einrichtung der eingangs genannten Art mit einfachen Mitteln so zu verbessern, daß sie sich mit geringerem Aufwand ausführen läßt.

Diese Aufgabe wird durch die in dem Patentanspruch 1 angegebene Erfindung gelöst. Vorteilhafte Ausgestaltungen und Weiterbildungen sind in den Unteransprüchen angegeben.

Die Erfindung läßt sich in Verbindung mit allen geeigneten Druckmitteln ausführen.

Die Erfindung wird nachstehend unter Angabe weiterer Vorteile anhand eines in Zeichnungen dargestellten Ausführungsbeispiels erläutert. Dabei werden für funktionsgleiche Bauelemente durchgehend gleiche Bezugszeichen verwendet.

Es zeigen:

**Fig.1** eine generelle Anordnung eines Lift-Achsaggregats mit einer Einrichtung zur Gewinnung eines Achslastsignals von dessen Antriebsachse,

**Fig.2** Einzelheiten der Einrichtung zur Gewinnung des Achslastsignals.

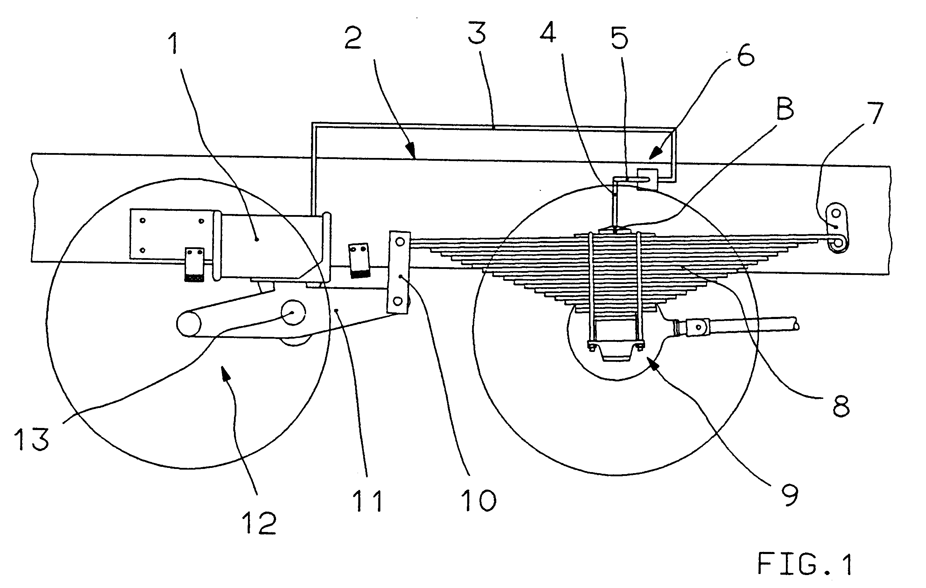

Fig.1 zeigt ausschnittsweise einen generell mit (2) bezeichneten Fahrzeugoberbau, der in bekannter Weise aus einem Fahrzeugrahmen sowie Aufbau- und Anbauteilen besteht. Über wenigstens ein mechanisches Federelement, Aufhänge- und Verbindungsmittel (7, 10, 13), wenigstens einen Doppelhebel (11) und wenigstens ein Druckmittelelement ist an dem Fahrzeugoberbau (2) ein Lift-Achsaggregat aufgehängt. Das mechanische Federelement ist als Blattfeder (8) ausgebildet und wird als solche nachstehend in Bezug genommen. Entsprechendes gilt für das als Liftbalg (1) ausgebildete Druckmittelelement. Ein Liftbalg ist üblich, wenn das verwendete Druckmittel gasförmig, insbesondere Luft, ist. Es ist aber ebenso üblich, als Druckmittelelement Kolbenzylinder einzusetzen, dies insbesondere bei Verwendung eines hydraulischen Druckmittels. Auch hinsichtlich des mechanischen Federelements sind andere Bauarten üblich.

Das Lift-Achsaggregat besteht aus einer durch die Blattfeder (8) mechanisch gefederten Antriebsachse (9) und einer Liftachse (12). Die Liftachse (12) ist als Nachlaufliftachse dargestellt, kann aber in bekannter Weise auch vorauslaufend angeordnet sein.

Die Wirkungsweise eines solchen Lift-Achsaggregats ist in der Beschreibungseinleitung ausführlich erläutert. Der Vollständigkeit halber ist nachzutragen, daß die dort erwähnten Hebelverhältnisse sich aus den Hebellängen des Doppelhebels (11) und der Länge der Blattfeder (8) ergeben.

Fig.1 zeigt noch die generelle Anordnung einer Einrichtung (6) zur Gewinnung eines Achslastsignals der Antriebsachse (9). Auf diese wird über ein Gestänge (4) und einen Hebel (5) der Weg eines Punktes (B) der Antriebsachse (9) etwa in Richtung der Achslast, also etwa senkrecht zur Fahrbahn, und relativ zum Fahrzeugoberbau (2), das ist die Einfederung der Antriebsachse (9), übertragen. Der Einfachheit und Übersichtlichkeit halber ist der Punkt (B) an einem Bereich der Blattfeder (8) dargestellt, der fest mit der Antriebsachse (9) verbunden ist. Der Punkt (B) kann aber auch an anderen geeigneten Bereichen der Antriebsachse (9) oder der Blattfeder (8) vorgesehen sein.

Außerdem wird der Einrichtung (6) über eine Druckmittelleitung (3) der in dem Liftbalg (1) herrschende Druck zugeführt.

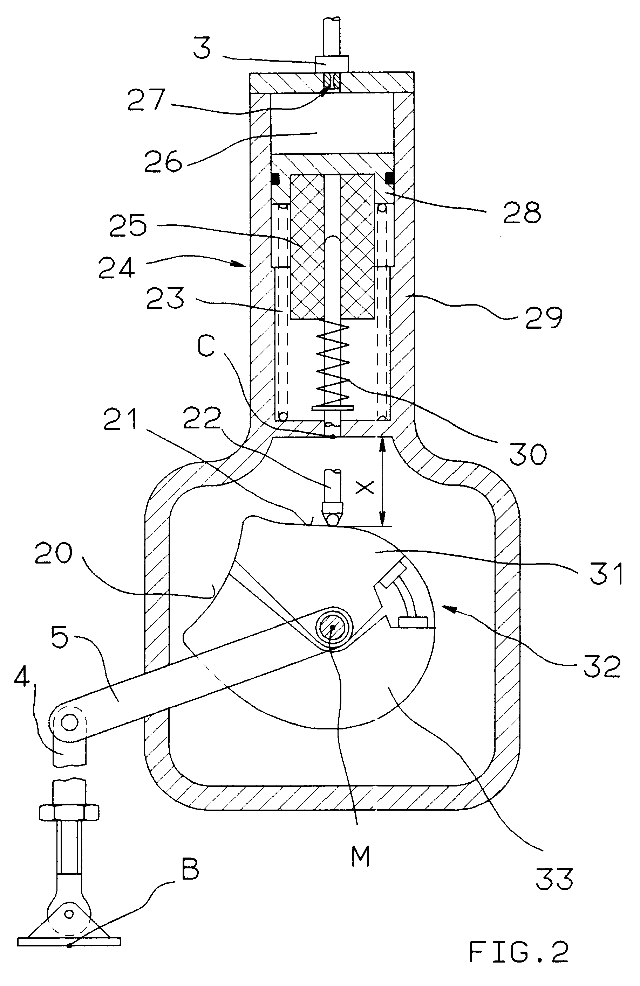

Fig.2 zeigt Einzelheiten der Einrichtung (6).

In einem Gehäuse (29) ist ein Signalkörper (31, 33) um eine Drehachse drehbar gelagert. Die Drehachse wird im folgenden mit dem Bezugszeichen (M) ihres Schnittpunktes mit der Zeichnungsebene in Bezug genommen. Das Gehäuse (29) ist am Fahrzeugrahmen befestigt, so daß es selbst Bestandteil des Fahrzeugoberbaus (2) ist. In dem Gehäuse (29) und damit am Fahrzeugoberbau (2) ist ein Punkt (C) definiert, der innerhalb der durch die weiter unten beschriebenen Funktionen gesetzten Grenzen beliebig angeordnet sein kann. Beispielsweise kann (C) auf der Drehachse (M) liegen.

Die Mantelfläche des Signalkörpers (31, 33) weist eine Kontur (20, 21) auf, die für jede Drehstellung des Signalkörpers (31, 33) einen vorbestimmten Abstand (x) im wesentlichen quer zu der Drehachse (M) von dem Punkt (C) einnimmt. Die Kontur (20, 21) kann an dem Signalkörper (31, 33) flächig oder linienförmig ausgebildet sein.

An dem Signalkörper (31, 33) greift der Hebel (5) an. An seinem freien Ende ist der Hebel (5) mit dem Gestänge (4) verbunden. Dadurch wird der in Rede stehende Weg des Punktes (B) der Antriebsachse (9) in eine Verdrehung des Signalkörpers (31, 33) umgesetzt.

Die Kontur (20, 21) besteht aus zwei Abschnitten (20) bzw. (21), deren einer (21) den Abstand (x) bei abgeschalteter Liftachse (12) und deren anderer (20) den Abstand (x) bei zugeschalteter Liftachse (12) bestimmt. Zwischen diesen Abschnitten weist die Kontur (20, 21) einen nicht näher bezeichneten neutralen Bereich auf, der dem Wegsprung beim Zu- und Abschalten der Liftachse (12) entspricht. Der Verlauf der Kontur (20, 21) wird im Abschnitt (21) durch die Federcharakteristik der Blattfeder (8) und im Abschnitt (20) durch die Federcharakteristik der Kombination von Blattfeder (8) und Liftbalg (1) bestimmt.

Zu der Einrichtung (6) gehört außerdem ein den Abstand (x) erfassender und generell mit (24) bezeichneter elektrischer Wegsensor. Dieser kann von jeder geeigneten Bauart sein. Im Ausführungsbeispiel besteht der Wegsensor in bekannter Weise aus einem Stator (25) und einen in diesen eintauchenden Fühler (22). Der Fühler (22) ist gegen den Signalkörper (31, 33) vorgespannt. Das von dem Wegsensor (24) abgegebene Signal wird von der Eintauchtiefe des Fühlers (22) in den Stator (25) bestimmt.

Der Stator (25) ist abhängig von dem Druck des Liftbalgs (1) axial verschiebbar. Die Eintauchtiefe des Fühlers (22) in den Stator (25) und damit das von dem Wegsensor abgegebene Signal hängen deshalb außer von dem Abstand (x) auch von dem Druck des Liftbalgs (1) ab.

Die Einrichtung funktioniert wie folgt.

Jeder Weg des Punktes (B) der in Rede stehenden Art wird über das Gestänge (4) und den Hebel (5) auf den Signalkörper (31, 33) übertragen und verdreht diesen entsprechend. Der Fühler (22) folgt dabei der Kontur (20, 21), so den Abstand (x) erfassend. Der Druck des Liftbalgs (1) bestimmt die entsprechende Lage des Stators (25) relativ zum Punkt (C). Aus der vom Druck des Liftbalgs (1) abhängigen Lage des Stators (25) und der vom Abstand (x) abhängigen Verschiebung des Fühlers (22) folgt eine resultierende Eintauchtiefe des Fühlers (22) in den Stator (25) die, je nach Betriebszustand der Liftachse (12) die Achslast bzw. den Achslastanteil der Antriebsachse (9) bestimmt und damit das zu gewinnende Achslastsignal liefert. Bei voll zugeschalteter Liftachse entspricht dieses - siehe weiter oben - auch der Achslast des kompletten Lift-Achsaggregats.

Es seien noch einige konstruktive Einzelheiten der dargestellten Einrichtung erläutert.

Die erwähnte Vorspannung des Fühlers (22) gegen den Signalkörper (31, 33) erfolgt über eine sich einerseits am Fühler (22) und andererseits am Stator (25) abstützende Feder (30), kann aber auch auf jede andere geeignete Art erfolgen.

Der Stator (25) ist Teil eines Kolbens (25, 28) der eine Kammer (26) begrenzt, welcher der Druck des Liftbalgs über die Druckmittelleitung (3) zugeführt wird. Der Kolben (25, 28) ist entgegen dem Druck in der Kammer (26) durch eine Feder (23) vorgespannt. Solange im Liftbalg (1) und in der Kammer (26) Umgebungsdruck herrscht, die Liftachse (12) also voll zugeschaltet ist, hält die Feder (23) den Kolben (25, 28) in der Stellung geringstens Volumens der Kammer (26). Aus dieser Stellung wird der Kolben (25, 28) mit zunehmendem Druck des Liftbalgs (1) in der Kammer (26) zunehmend verschoben, wobei die Eintauchtiefe des Stößels (22) in den Stator (25) entsprechend zunimmt.

Die Feder (23) ist derart ausgebildet und/oder einstellbar, daß die druckabhängige Verschiebung des Kolbens (25, 28) und damit des Stators (25) in nicht näher dargestellter Weise an einem Gehäuseanschlag oder durch Zublockgehen der Feder (23) ihr Ende findet.

Der Wegsensor (24), die Feder (23), das Kolbenteil (28) und die Kammer (26) sind im gleichen Gehäuse (29) wie der Signalkörper (31, 33) angeordnet. Sie können aber auch als getrennte Baueinheit mit eigenem Gehäuse ausgebildet werden.

In Fortbildung des bisher beschriebenen Umfangs der Einrichtung weist diese in der Druckmittelleitung (3) eine Drossel (27) auf. Diese verzögert die Verschiebung des Stators (25) gegenüber einer Änderung des Drucks im Luftbalg und verhindert so, daß jede fahrbahnbedingte Druckspitze im Liftbalg (1) in die Kammer (26) und damit auf die Eintauchtiefe des Stößels (22) in den Stator (25) sowie auf das Achslastsignal durchschlägt.

Eine andere Fortbildung besteht darin, daß zum Ausgleich von Einbautoleranzen und Toleranzen der Federcharakteristik der Blattfeder (8) und des Liftbalgs (1) der Signalkörper (31, 33) in nicht näher dargestellter Weise aus zwei Teilen (31) und (33) mit je einem Abschnitt (21) bzw. (20) der Kontur (20, 21) besteht, deren Lage zueinander durch eine schematisch angedeutete Einstellvorrichtung (32) eingestellt werden kann. Unter Verzicht auf diese Möglichkeit kann der Signalkörper in nicht näher dargestellter Weise einteilig ausgeführt werden.

Das von der Einrichtung (6) erzeugte elektrische Achslastsignal kann auf jede geeignete Art ausgewertet werden. Beispielhaft seien insoweit jeweils elektronische lastabhängige Bremskraftregelung, Traktionssteuerung, Anfahrhilfe, Antriebsachs-Überlastungsschutz usw. erwähnt.

Dabei bedeuten "Antriebsachs-Überlastungsschutz", daß mittels einer geeigneten Steuereinrichtung die Liftachse (12) automatisch zugeschaltet wird, wenn die Antriebsachse (9) bis zum zulässigen Wert ausgelastet ist. Bei der "Traktionssteuerung" wird über eine geeignete Steuereinrichtung der Druck im Liftbalg (1) derart gesteuert, daß die einmal erreichte zulässige Achslast der Antriebsachse (9) eingeregelt wird. Dadurch wird sichergestellt, daß von der Antriebsachse (9) stets die größtmögliche Vortriebskraft auf die Fahrbahn übertragen werden kann.

Bei der "Anfahrhilfe" wird durch eine geeignete Steuereinrichtung der Druck im Liftbalg (1) kurzzeitig so gesteuert, daß die Antriebsachse (9) ebenso kurzzeitig überlastet wird. Dadurch wird die von der Antriebsachse (9) auf die Fahrbahn übertragbare Vortriebskraft kurzzeitig erhöht, was insbesondere beim Anfahren, zumal auf einer Fahrbahn mit geringem Reibwert, von Vorteil ist.

Es liegt auf der Hand, daß auch mehrere der erwähnten Möglichkeiten der Auswertung des Achslastsignals gleichzeitig einsetzbar sind, zu welchem Zweck, gegebenenfalls, mehrere Einrichtungen der beschriebenen Art gleichzeitig, beispielsweise parallel oder winkelversetzt, mit getrennten Gehäusen oder mit gemeinsamen Gehäuse, vorgesehen sein können.

Der Fachmann erkennt auch, daß die in dem Ausführungsbeispiel in bzw. an dem Gehäuse (29) angeordneten erfindungswesentlichen Elemente auch ohne gemeinsames Gehäuse angeordnet werden können, sofern sie nur den erfindungswesentlichen Bedingungen, beispielsweise Elemente des Fahrzeugoberbaus bzw. der Antriebsachse bzw. des Lift-Achsaggregats zu sein, genügen.

Schließlich erkennt der Fachmann, daß sich der Schutzbereich der Erfindung nicht in den Ausführungsbeispielen erschöpft, sondern alle Ausgestaltungen umfaßt, deren Merkmale sich den Patentansprüchen unterordnen.

**Patentansprüche**

1. Einrichtung zur Gewinnung eines Achslastsignals der mechanisch gefederten Antriebsachse (9) eines aus der Antriebsachse (9) und einer durch Druckbeaufschlagung wenigstens eines Druckmittelelements (1) mit wenigstens einem Abschaltdruck abschaltbaren Liftachse (12) bestehenden Lift-Achsaggregats, mit den Merkmalen:

a) Die Einrichtung weist einen Signalkörper (31, 33) auf, der abhängig vom Weg eines Punktes (B) der Antriebsachse (9) relativ zum Fahrzeugoberbau (2) um eine am Fahrzeugoberbau (2) feste Drehachse (M) drehbar ist;

b) die Mantelfläche des Signalkörpers (31, 33) weist wenigstens eine Kontur (20, 21) auf, die für jede Drehstellung des Signalkörpers (31, 33) einen vorbestimmten Abstand (x) im wesentlichen quer zu der Drehachse (M) von einem Punkt (C) des Fahrzeugoberbaus (2) einnimmt;

c) die Einrichtung weist einen den Abstand (x) erfassenden elektrischen Wegsensor (24) auf,

wobei der Stator (25) des Wegsensors (24) abhängig von dem Druck des Druckmittelelements (1) relativ zu dem Punkt (C) axial verschiebbar ist.

2. Einrichtung nach Anspruch 1, dadurch gekennzeichnet, daß die Verschiebung des Stators (25) bei einer Änderung des Drucks des Druckmittelelements (1) dieser Änderung verzögert folgt.

3. Einrichtung nach Anspruch 1, dadurch gekennzeichnet, daß der Stator (25) Teil eines eine mit dem Druck des Druckmittelelements (1) beaufschlagbare Kammer (26) begrenzenden Kolbens (25, 28) ist.

4. Einrichtung nach den Ansprüchen 2 und 3, dadurch gekennzeichnet, daß in der Zuleitung des Drucks zu der Kammer (26) eine Drossel (27) angeordnet ist.

## Claims

1. Device for obtaining an axle-load signal from the mechanically sprung drive axle (9) of a lift/axle unit consisting of the drive axle (9) and a lift axle (12) which can be switched off by the application of the pressure of at least one pressure-medium element (1) with at least one switching pressure, having the features:
   a) the device has a signal member (31, 33) which is rotatable about a hinge pin (M) fixed to the vehicle superstructure (2) as a function of the path of a point (B) on the drive axle (9) relative to the vehicle superstructure (2);
   b) the outer surface of the signal member (31, 33) has at least one contour (20, 21) that assumes for each rotational position of the signal member (31, 33) a predetermined distance (x) substantially transverse to the hinge pin (M) from a point (C) on the vehicle superstructure (2);
   c) the device has an electrical path sensor (24) that detects the distance (x),
   wherein the stator (25) of the path sensor (24) is axially displaceable relative to the point (C) as a function of the pressure of the pressure-medium element (1).

2. Device according to claim 1, characterised in that the displacement of the stator (25) in the event of a change in the pressure of the pressure-medium element (1) follows that change in a delayed manner.

3. Device according to claim 1, characterised in that the stator (25) is part of a piston (25, 28) that bounds a chamber (26) to which the pressure of the pressure-medium element (1) can be applied.

4. Device according to claims 2 and 3, characterised in that a throttle (27) is arranged in the line for supplying pressure to the chamber (26).

## Revendications

1. Dispositif pour obtenir un signal de charge d'essieu de l'essieu moteur (9), suspendu mécaniquement, d'un ensemble composé de cet essieu moteur (9) et d'un essieu relevable (12) qui peut être mis hors d'action par l'application d'au moins une pression de mise hors d'action ou pression de relevage à au moins un organe de relevage (1) mû par un fluide de pression, ayant les particularités:
   a) le dispositif comporte un corps générateur de signal (31, 33) qui peut être tourné, autour d'un axe de rotation (M) fixe prévu sur la carrosserie (2) du véhicule, en fonction du déplacement d'un point (B) de l'essieu moteur (9) par rapport à la carrosserie (2) du véhicule;
   b) la surface latérale du corps générateur de signal (31, 33) présente au moins un contour (20, 21) qui, pour toute position angulaire de ce corps, vient se placer à une distance (x) préfixée, orientée pour l'essentiel transversalement à l'axe de rotation (M), d'un point (C) de la carrosserie (2) du véhicule;
   c) le dispositif comprend un capteur électrique de déplacement (24) détectant la distance (x), dans lequel le stator (25) du capteur de déplacement (24) est déplaçable axialement en translation, par rapport au point (C), en fonction de la pression de l'organe de relevage (1) mû par un fluide de pression.

2. Dispositif selon la revendication 1, caractérisé en ce que la translation du stator (25), lors d'une variation de la pression de l'organe de levage (1) mû par un fluide de pression, suit cette variation de façon retardée.

3. Dispositif selon la revendication 1, caractérisé en ce que le stator (25) est une partie d'un piston (25, 28) délimitant une chambre (26) à laquelle peut être appliquée la pression de l'organe de levage (1) mû par un fluide de pression.

4. Dispositif selon les revendications 2 et 3, caractérisé en ce qu'un étranglement (27) est placé dans l'amenée de la pression à la chambre (26).

FIG. 1

FIG.2

7